(19) Europäisches Patentamt
European Patent Office
Office européen des brevets

(11) **EP 3 356 591 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(51) Int Cl.:
***D04H 1/60*** *(2006.01)*     ***B29C 70/50*** *(2006.01)*
***D04H 3/04*** *(2012.01)*     ***D04H 3/12*** *(2006.01)*
***B29B 15/12*** *(2006.01)*

(21) Anmeldenummer: **16775206.2**

(22) Anmeldetag: **28.09.2016**

(86) Internationale Anmeldenummer:
**PCT/EP2016/073091**

(87) Internationale Veröffentlichungsnummer:
**WO 2017/055339 (06.04.2017 Gazette 2017/14)**

(54) **VERFAHREN ZUR HERSTELLUNG EINES FASER-MATRIX-HALBZEUGS**

METHOD FOR PRODUCING A FIBER MATRIX SEMI-FINISHED PRODUCT

PROCEDE DE FABRICATION D'UN SEMI-PRODUIT FIBRE/MATRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2015 EP 15187840**

(43) Veröffentlichungstag der Anmeldung:
**08.08.2018 Patentblatt 2018/32**

(73) Patentinhaber: **Lanxess Deutschland GmbH**
**50569 Köln (DE)**

(72) Erfinder:
• **BIENMÜLLER, Matthias**
  **47803 Krefeld (DE)**
• **JOACHIMI, Detlev**
  **47800 Krefeld (DE)**
• **WAMBACH, Wolfgang**
  **51065 Köln (DE)**
• **ENDTNER, Jochen**
  **50679 Köln (DE)**

(56) Entgegenhaltungen:
**EP-A1- 0 062 179**     **DE-A1- 2 558 200**
**US-A1- 2014 008 018**

EP 3 356 591 B1

**Beschreibung**

Die vorliegende Erfindung betrifft ein Verfahren, insbesondere Imprägnierverfahren, zur Herstellung eines Faser-Matrix-Halbzeugs unter Einsatz von Mikrogranulaten.

**Stand der Technik**

In anspruchsvollen Anwendungen, wie beispielsweise Formteilen für den Fahrzeugbau und Luftfahrtanwendungen, sind Faserverbundwerkstoffe aufgrund einer einzigartigen Kombination aus geringem Gewicht, hoher Festigkeit und Temperaturbeständigkeit erwünscht.

Faserverbundwerkstoffe werden hergestellt unter Verwendung eines Fasermaterial enthaltenden Faserhalbzeugs. Faserhalbzeuge sind vorzugsweise Vliesstoffstrukturen, Textilien, Gewebe, unverfestigte Faservliese und Kombinationen derselben. Fasermaterialien sind Rovings, also Bündel, Stränge oder Multifilamentgarne aus parallel angeordneten Filamenten bzw. Endlosfasern oder Langfasern. Für die Herstellung von Faserverbundstrukturen, auch Faser-Matrix-Halbzeuge genannt, werden diese Faserhalbzeuge bzw. die darin enthaltenden Fasermaterialien mit einer Polymerharz-Zusammensetzung imprägniert. Das dabei vorzugsweise anzuwendende Verfahren ist heute das Pulverimprägnieren.

Beim Pulverimprägnieren wird die für die Matrix des Faser-Matrix-Halbzeugs einzusetzende Polymerharz-Zusammensetzung in Pulverform auf die Fasermaterialien bzw. das Faserhalbzeug aufgebracht. Das Auftragen des Pulvers erfolgt vorzugsweise durch Streuen, Rieseln, Drucken, Spritzen, Sprühen, thermisches Spritzen oder Flammspritzen, oder durch Fließbett-Beschichtungsverfahren. Anschließend werden die pulverbeladenen bzw. pulverbeschichteten Faserhalbzeuge einem Thermopressing unterzogen, wobei die Langfasern oder Endlosfasern im Faserhalbzeug möglichst vollständig imprägniert und konsolidiert werden.

Verbundstrukturen aus Fasermaterial auf Basis von Kohlenstofffasern, auch als Carbonfasern bezeichnet, sind besonders interessant, da gerade die Kohlenstofffasern zu sehr guten mechanischen Eigenschaften in Faser-Matrix-Halbzeugen und den daraus herzustellenden Erzeugnissen führen.

Wenn schon das Imprägnieren von Glasfasern ein kritischer Faktor bei der Herstellung von Faser-Matrix-Halbzeugen ist, so kann die Imprägnierung von Fasermaterial aus Kohlenstofffasern mit thermoplastischen Polymeren besonders schwierig sein. Dies gilt insbesondere für Fasermaterial mit hohem Flächengewicht, oder beim Einsatz polarer Polymere aufgrund der geringen Polarität von Kohlenstofffasern.

Gegenwärtige Verfahren unter Verwendung gemahlener Polymer-Zusammensetzungen haben zudem den Nachteil eines hohen Staubanteils. Dieser macht energieaufwendige Absaugprozesse während der Herstellung der Faser-Matrix-Halbzeuge notwendig, was zu Umweltbelastung und zu höheren Kosten führt. Gefilterte Staubrückstände müssen entsorgt werden. Der Staubanteil führt ferner zu einer erhöhten Staubbelastung der Luft in den Fertigungshallen, was bezüglich arbeitshygienischen Aspekten (Exposition der Mitarbeiter) und der Gefahr von Staubgasexplosionen bedenklich sein kann. Gemahlene Polymer-Zusammensetzungen werden durch Mahlen hergestellt. In der Regel erfolgt dies bei tiefen Temperaturen durch ein kryogenes Mahlverfahren, z. B. durch Abkühlen mit flüssigem Stickstoff und anschließendem mechanischen Mahlen. Auch dieser Mahlvorgang ist sehr energieaufwendig und kostenintensiv. Zudem besteht eine hohe Gefahr, dass beim Mahlen (Kondensation von Luftfeuchtigkeit durch niedrige Temperatur) oder danach die gemahlene Polymer-Zusammensetzung wegen der erheblich vergrößerten Oberfläche des Mahlguts Feuchtigkeit aufnimmt. Feuchtigkeit führt beim Einsatz von Polymeren zu minderwertigerer Qualität (geringer Qualität der Oberfläche, schlechtere mechanische Eigenschaften) des Faser-Matrix-Halbzeuges aufgrund von Polymerabbau und Ausgasen der Feuchte.

Das Mahlen von Polymer-Zusammensetzungen ist zudem ein zusätzlicher Prozessschritt, bei dem die Gefahr besteht, dass es hier zu unerwünschten Verunreinigungen mit entsprechend nachteiligen Auswirkungen auf das Faser-Matrix-Halbzeug bzw. dessen Eigenschaften kommt. Verunreinigungen Im Mahlgut können zudem auftreten, wenn die Polymer-Zusammensetzung zum Mahlen zu anderen Unternehmen transportiert wird und dort die verwendeten Mühlen im Wechsel für verschiedenste Materialien eingesetzt werden.

Es besteht daher ein hohes Interesse darin, einerseits die Handhabung des als Matrixpolymer einzusetzende Polymer-Zusammensetzung aber auch den Imprägniervorgang sowie die parallel stattfindende oder sich an die Imprägnierung anschließende Konsolidierung im Herstellungsprozess von Faser-Matrix-Halbzeugen, insbesondere solchen auf Basis von Kohlenstofffasern, zu optimieren.

Aus US 2014/008018 A1 ist ein Verfahren zur Herstellung imprägnierter Stoffe und von Composite-Artikeln bekannt, worin ein Fasermaterial mit einer Polyamid-Zusammensetzung in Partikelform, beispielsweise in Form von Perlen oder Mikroperlen, durch teilweises Aufschmelzen der Partikel imprägniert wird. In einer Ausführungsform kann die Polyamid-Zusammensetzung ein Novolac-Harz enthalten.

DE 2558200 A1 beschreibt ein Verfahren zur Herstellung von Prepregs auf Basis von lösungsmittelfreien, vorzugsweise duroplastischen Kunstharzen. Verfestigte Gebilde aus textilen Materialien auf Basis von Melamin-Formaldehydharzen sind schließlich auch aus EP 0 062179 A1 bekannt.

Aufgabe der vorliegenden Erfindung war es, das Pulverimprägnierverfahren zur Herstellung von Faser-Matrix-Halbzeugen dahingehend zu verbessern, dass die benötigte Polymer-Zusammensetzung beim Auftragen auf das Fasermaterial zu möglichst wenig Staubentwicklung führt, ohne den Imprägniervorgang oder die Konsolidierung in irgendeiner Weise zu beeinträchtigen.

Aufgabe der vorliegenden Erfindung war es zudem, das Pulverimprägnierverfahren zur Herstellung von Faser-Matrix-Halbzeugen dahingehend zu verbessern, dass es zu einer verbesserten Imprägnierung der Fasern und / oder einer verbesserten Konsolidierung kommt.

In einer besonders bevorzugten Ausführungsform soll es möglich sein, einschichtige Faser-Matrix-Halbzeuge auf diese Weise bereit zu stellen. Gemäß WO 2008 / 058971 A1 und WO 2010 / 132 335 A1 führen nämlich die Verfahren des Standes der Technik zu Faser-Matrix-Halbzeugen, die bei seitlicher Betrachtung einer Schnittfläche durch ein solches Faser-Matrix-Halbzeug einen geschichteten Aufbau erkennen lassen. Dabei unterscheidet sich die Matrixharzzusammensetzung, die das textile Halbzeug einkapselt und einbettet um mit dieser ein interpenetrierendes Netzwerk von faserigem Material zu bilden, von der Oberflächenharzzusammensetzung. Entweder ist Letztere frei von Fasermaterial oder sie enthält wie in WO 2010 / 132 335 A1 eine andere Polymerzusammensetzung. Besonders deutlich wird der geschichtete Aufbau in der WO 2012 / 132 399 A1, die innerhalb eines Faser-Matrix-Halbzeugs eine Oberflächenharzzusammensetzung und eine Matrixharzzusammensetzung voneinander unterscheidet. Schließlich beschreibt auch WO 2012 / 058 379 A1 im Beispielteil den geschichteten Aufbau von Composite Materialien aus Folien.

Gerade aber ein geschichteter Aufbau von Faser-Matrix-Halbzeugen, kann sich nachteilig auf die Stabilität eines Erzeugnisses auswirken, als Folge des Auftretens einer Delamination im Falle mechanischer Beanspruchung. Ausgehend von diesem Stand der Technik bestand die Aufgabe der vorliegenden Erfindung darin, Faser-Matrix-Halbzeuge bereit zu stellen, die gegenüber dem Stand der Technik zusätzlich zu den bereits oben definierten Aufgaben keine, oder zumindest erheblich reduzierte Neigung zu Delamination aufweisen.

Die Einschichtigkeit im Sinne der vorliegenden Erfindung zeichnet sich zudem durch das Zusammenspiel der Merkmale der Faserhalbzeuglagen, dem Imprägnierungsgrad, dem Konsolidierungsgrad, dem Faservolumenghalt und dem Luft- oder Gasgehalt aus. Kennzeichnend ist, dass der Verteilungsgradient des Fasergehalts bei einem Schnitt durch ein einschichtiges Faser-Matrix-Halbzeug nahezu unverändert ist, vorzugsweise sich von der Oberfläche bis zur Mitte um maximal 5%, vorzugsweise um maximal 3% verändert.

Unter Imprägnierung wird erfindungsgemäß das Benetzen aller Fasern mit der Polymer-Zusammensetzung verstanden. Die Konsolidierung bezeichnet das Exprimieren von eingeschlossener Luft. Der Vorgang der Imprägnierung und Konsolidierung ist unter anderem abhängig von den Parametern Temperatur, Druck und Zeit. Beide Eigenschaften, den Grad der Imprägnierung und der Konsolidierung, lassen sich durch die Bestimmung mechanischer Kennwerte am erhaltenen Faser-Matrix-Halbzeug messen bzw. überprüfen, insbesondere durch Messung der Zugfestigkeit an Faser-Matrix-Halbzeug-Probekörpern. Zur Ermittlung der Zugfestigkeit dient der Zugversuch, ein quasistatisches, zerstörendes Prüfverfahren, im Falle von Kunststoffen nach ISO 527-4 oder -5.

**Erfindung**

Gegenstand der vorliegenden Erfindung ist
ein Verfahren zur Herstellung eines Faser-Matrix-Halbzeugs umfassend

a) Bereitstellen wenigstens eines Endlosfasern enthaltenden Fasermaterials,

b) Bereitstellen einer Polymer-Zusammensetzung in Form eines Mikrogranulats mit einer mittels Trockensiebanalyse gemäß DIN 53477 zu bestimmenden mittleren Korngröße im Bereich von 0,01 bis 3 mm,

c) Auftragen des Mikrogranulats auf das Fasermaterial,

d) Imprägnieren und Konsolidieren des Fasermaterials mit der Polymer-Zusammensetzung zu einem Verbund durch Einwirken von Temperaturen $\geq$ der Schmelztemperatur des wenigstens einen Polymer und Druck auf das mit Mikrogranulat beaufschlagte Fasermaterial,

e) Abkühlen unter Erhalt der Verbundstruktur, wobei das Mikrogranulat eine Schüttdichte von 200 bis 1.800 g/l, die nach EN ISO 60 bestimmt wird und einen Gehalt an Restfeuchte von nicht mehr als 0,3 Gew.-% bezogen auf das Gesamtgewicht aufweist und der Restwassergehalt, mittels Thermowaage anhand von Proben eines Gewichts im Bereich von ca. 1 bis 5 g bestimmt wird, indem das Ausgangsgewicht bestimmt wird, die Proben bei 160°C für eine Dauer von 20 Minuten getrocknet werden und der Gewichtsverlust bestimmt wird, und man das Mikrogranulat durch Mischen der einzelnen Komponenten der Polymer-Zusammensetzung in wenigstens einem Mischwerkzeug, Austragen der Mischung als Strang, Abkühlen des Strangs bis zur Granulierfähigkeit und Granulieren desselben erhält, und das Fasermaterial ein Gewebe ist und als Polymer-Zusammensetzung eine aus wenigstens Polyamid 6 oder Polyamid 66 eingesetzt wird.

Imprägnierverfahren zur Herstellung eines Faser-Matrix-Halbzeugs umfasst

a) Bereitstellen wenigstens eines Fasermaterials, vorzugsweise eines Fasermaterials enthaltend Endlosfasern,

b) Bereitstellen einer Polymer-Zusammensetzung in Form eines Mikrogranulats,

c) Auftragen des Mikrogranulats auf das Fasermaterial,

d) Imprägnieren und Konsolidieren des Fasermaterials mit der Polymer-Zusammensetzung zu einem Verbund durch Einwirken von Temperaturen ≥ der Schmelztemperatur des wenigstens einen Polymers und Druck auf das mit Mikrogranulat beaufschlagte Fasermaterial, und

e) Abkühlen unter Erhalt der Verbundstruktur,

wobei ein Mikrogranulat ein körniges Haufwerk darstellt, dessen einzelne Teilchen mehr oder weniger eine einheitliche Korngröße aufweisen und als Granulatkörner, Granalien oder Pellets bezeichnet werden und diese eine mittels Trocken-Siebanalyse gemäß DIN 53477 zu bestimmende mittlere Korngröße im Bereich von 0,01 bis 3 mm aufweisen.

Ein Imprägnierverfahren zur Herstellung eines einschichtigen Faser-Matrix-Halbzeugs umfasst auch

a) Bereitstellen eines Fasermaterials in Form von 1 bis 100 Faserhalbzeuglagen aus Endlosfasern, vorzugsweise 2 bis 40 Faserhalbzeuglagen aus Endlosfasern, besonders bevorzugt 2 bis 10 Faserhalbzeuglagen aus Endlosfasern, mit jeweils einem Flächengewicht im Bereich von 5 g/m$^2$ bis 3000 g/m$^2$, bevorzugt im Bereich von 100 g/m$^2$ bis 900 g/m$^2$, besonders bevorzugt im Bereich von 150 g/m$^2$ bis 750 g/m$^2$,

b) Bereitstellen einer Polymer-Zusammensetzung in Form eines Mikrogranulats, wobei die Polymer-Zusammensetzung eine Schmelze-Volumenfließrate MVR nach ISO 1133 im Bereich von 50 cm$^3$/10 min bis 500 cm$^3$/10 min, besonders bevorzugt im Bereich von 50 cm$^3$/10 min bis 300 cm$^3$/10 min, ganz besonders bevorzugt im Bereich von 100 cm$^3$/10 min bis 200 cm$^3$/10 min bei einer Last von 5 kg und einer Temperatur von 260°C aufweist,

c) Auftragen des Mikrogranulats auf die Gesamtheit aller faserhalbzeuglagen,

d) Imprägnieren und Konsolidieren der Gesamtheit aller Faserhalbzeuglagens mit der Polymer-Zusammensetzung zu einem Verbund durch Einwirken von Temperaturen ≥ der Schmelztemperatur der Polymer-Zusammensetzung und Druck auf die mit Mikrogranulat beaufschlagte Gesamtheit aller Faserhalbzeuglagen,

e) Abkühlen bzw. Solidifikation unter Erhalt der Verbundstruktur mit einem nach DIN 1310 definierten Volumenanteil an Fasermaterialien im Bereich von 25 bis 65%, vorzugsweise im Bereich von 30 bis 55%, besonders bevorzugt im Bereich 40 bis 50%, und einem durch Dichtebestimmung nach DIN EN ISO 1183 zu bestimmenden Volumenanteil an Luft oder Gas von weniger als 10%, bevorzugt weniger als 5%,

wobei ein Mikrogranulat ein körniges Haufwerk darstellt, dessen einzelne Teilchen mehr oder weniger eine einheitliche Korngröße aufweisen und als Granulatkörner, Granalien oder Pelletts bezeichnet werden und diese eine mittels Trocken-Siebanalyse gemäß DIN 53477 zu bestimmende mittlere Korngröße im Bereich von 0,01 bis 3 mm aufweisen.

Indem man wenigstens ein Fasermaterial mit einer Polymer-Zusammensetzung in Form eines Mikrogranulats Hitze und Druck aussetzt, erfolgt eine Imprägnierung und anschließend oder aber gleichzeitig eine Konsolidierung der Fasern mit der einzusetzenden Polymer-Zusammensetzung und man erhält ein Faser-Matrix-Halbzeug in Form einer Verbundstruktur unter Vermeidung der oben genannten Nachteile.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag dieser Anmeldung gültigen Fassung. Eine Polymer-Zusammensetzung im Sinne der vorliegenden Erfindung ist eine Zusammensetzung enthaltend wenigstens ein Polymer.

Erfindungsgemäß lassen sich aber auch mit Spritzgussmassen überspritzte oder umspritzte Verbundstrukturen herstellen, indem entweder während der Konsolidierung oder in einem zusätzlichen Verfahrensschritt Verstärkungen, vorzugsweise rippenförmige Verstärkungsstrukturen, oder Funktionselemente durch Spritzguss an die Verbundstruktur angefügt werden.

**Begriffsbestimmungen**

Der Fachmann versteht unter einem Granulat/Mikrogranulat ein körniges Haufwerk, dessen einzelne Teilchen mehr oder weniger eine einheitliche Korngröße aufweisen und als Granulatkörner, Granalien oder Pelletts bezeichnet werden. Während mit dem Oberbegriff Granulat mittlere Korngrößen im Bereich von 0,1 bis 50 mm bezeichnet werden, verwendet man den Begriff Mikrogranulat - so auch im Sinne der vorliegenden Erfindung - für mittlere Korngrößen im Bereich von 0,01 bis 3 mm. Der Begriff Granulat bzw. Mikrogranulat bezieht sich auf die Form und Größe des Endprodukts und nicht auf dessen Herstellungsmethode. Noch kleinere Partikel werden als Stäube bezeichnet und sind in der EN 481 definiert. Im Vergleich zum gemahlenen Pulvern entsteht beim Mikrogranulat kein Staub, elektrostatische Aufladungen werden minimiert und die Gefahr von Explosionen bei der Verarbeitung erheblich reduziert. Mikrogranulate können mittels Saugvorrichtungen befördert werden und zu einer schnelleren Befüllung des zur Verarbeitung vorgesehenen Werkzeugs und damit zur Kostenreduktion in Produktionsprozessen beitragen.

Die Schmelze-Volumenfließrate MVR nach ISO 1133 wird im Rahmen der vorliegenden Erfindung mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen bzw. Masse der Polymerschmelze - des sogenannten Extrudats - als Funktion der Zeit. Ein wesentlicher Vorteil der Schmelze-Volumenfließrate liegt in der einfachen Messung des Kolbenwegs bei bekanntem Kolbendurchmesser zur Bestimmung des ausgetretenen Schmelzevolumens. Die Einheit für den MVR ist $cm^3/10min$.

Die in der vorliegenden Beschreibung verwendeten Begriffe "über", "bei" oder "etwa" sollen bedeuten, dass der danach genannte Betrag oder Wert der konkrete Wert oder ein etwa gleicher Wert sein kann. Der Ausdruck soll vermitteln, dass ähnliche Werte zu erfindungsgemäß gleichwertigen Ergebnissen oder Effekten führen und von der Erfindung mit umfasst werden.

Eine "Faser" im Sinne der vorliegenden Erfindung ist ein makroskopisch homogener Körper mit hohem Verhältnis von Länge zu seiner Querschnittsfläche. Der Faserquerschnitt kann eine beliebige Form sein, ist aber in der Regel rund oder oval.

Gemäß **"http://de.wikipedia.org/wiki/Faser-Kunststoff-Verbund"** unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Faserlängen können beispielsweise durch Microfokus-Röntgen-Computertomographie (μ-CT) bestimmt werden; DGZfP-Jahrestagung 2007 - Vortrag 47.

Erfindungsgemäß herzustellende Faser-Matrix-Halbzeuge enthalten Endlosfasern. In einer Ausführungsform können sie zudem auch Langfasern enthalten. Endlosfasern werden als Rovings oder Gewebe eingesetzt und erzielen in den daraus herzustellenden Erzeugnissen die höchsten Steifigkeits- und Festigkeitswerte. Der im Rahmen der vorliegenden Anmeldung verwendete Begriff "Fasermaterial" bedeutet ein Material, das entweder als Faserhalbzeug vorliegt und vorzugsweise ausgewählt wird aus der Gruppe Gewebe, Gelege einschließlich Multiaxialgelege, Gesticke, Geflechte, Vliese, Filze, und Matten, oder aber das Fasermaterial sind unidirektionale Faserstränge. Ferner bedeutet Fasermaterial ein Gemisch oder eine Kombinationen aus zwei oder mehr dieser genannten Faserhalbzeuge bzw. unidirektionalen Faserstränge.

Zur Herstellung von Faserhalbzeugen sind die zu verwendenden Fasern in der Weise miteinander verbunden, dass zumindest eine Faser oder ein Faserstrang mindestens eine andere Faser oder einen anderen Faserstrang berührt, um ein kontinuierliches Material zu bilden. Oder aber, die zur Herstellung von Faserhalbzeugen verwendeten Fasern berühren einander in der Weise, dass eine kontinuierliche Matte, Gewebe, Textil oder ähnliche Struktur gebildet wird.

Der Begriff "Flächengewicht" bezeichnet die Masse eines Materials in Abhängigkeit von der Fläche und bezieht sich im Rahmen der vorliegenden Erfindung auf die trockene Faserschicht. Das Flächengewicht wir nach DIN EN ISO 12127 bestimmt.

Die Fadenzahl in einem Faserbündel oder Kabel ist nützlich bei der Definition einer Kohlenfasergröße. Gängige Größen sind 12.000 (12k) Filamente pro Faserbündel oder 50000 (50k) Filamente pro Faserbündel. Die Fadenzahl wird nach DIN EN 1049-2 bzw. ISO 7211-2 bestimmt.

"Imprägniert" bedeutet im Sinne der vorliegenden Erfindung, dass die Polymer-Zusammensetzung in die Vertiefungen und Hohlräume des Fasermaterials bzw. Faserhalbzeugs eindringt und das Fasermaterial benetzt. "Konsolidiert" im Sinne der vorliegenden Erfindung bedeutet, dass in der Verbundstruktur ein Luftanteil von weniger als 10 Volumen-% vorliegt. Imprägnierung (Benetzung des Fasermaterials durch die Polymer-Zusammensetzung) und Konsolidierung (Minimieren des Anteils eingeschlossener Gase) können gleichzeitig und / oder nacheinander erfolgen und / oder durchgeführt werden.

**Verfahrensschritt a)**

Das im Verfahrensschritt a) bereitzustellende **Fasermaterial** ist ein Fasermaterial enthaltend Endlosfasern. Vorzugsweise umfasst der Begriff Fasermaterial die Gesamtheit aller Faserhalbzeuglagen aus Endlosfasern. In einer Ausführungsform kann das erfindungsgemäß einzusetzende Fasermaterial zusätzlich zu den Endlosfasern noch Langfasern mit Längen im Bereich von 1 bis 50 mm enthalten.

Vorzugsweise enthält das erfindungsgemäß einzusetzende Fasermaterial keine zerkleinerten Fasern oder Teilchen, insbesondere keine Kurzfasern mit einer Länge im Bereich von 0,1 bis 1 mm.

Das einzusetzende Fasermaterial ist ein Gewebe.

Vorzugsweise werden Fasermaterialien aus Glasfasern und/oder Kohlenstofffasern eingesetzt, besonders bevorzugt aus Glasfasern.

Vorzugsweise ist das Fasermaterial aus Kohlenstofffasern ein Gewebe mit einem Flächengewicht von größer als oder gleich 150 $g/m^2$.

Vorzugsweise ist das Fasermaterial aus Glasfasern ein Gewebe. Vorzugsweise hat das Fasermaterial aus Glasfasern ein Flächengewicht größer oder gleich 200 $g/m^2$, besonders bevorzugt größer als oder gleich 300 $g/m^2$.

In einer Ausführungsform der Erfindung werden Kombinationen von Fasermaterial aus Kohlenstofffasern und Fasermaterial aus Glasfasern eingesetzt. Bevorzugt sind Fasermaterialkombinationen bzw. Faserhalbzeuge enthaltend in den Außenlagen Kohlenstofffasern und in wenigstens einer Innenlage Glasfasern.

Vorzugsweise enthält ein erfindungsgemäß herzustellendes Faser-Matrix-Halbzeug mehrere Schichten von Fasermaterialien, die mit einer oder mehreren Polymer-Zusammensetzungen in Mikrogranulatform imprägniert werden.

Vorzugsweise liegt der Gehalt an Fasermaterialien im erfindungsgemäß herzustellenden Faser-Matrix-Halbzeug im Bereich von 40 bis 75 Gewichtsprozent, besonders bevorzugt im Bereich von 65 bis 75 Gewichtsprozent.

**Verfahrensschritt b)**

Erfindungsgemäß wird Polyamid 6 [CAS Nr. 25038-54-4] oder Polyamid 66 [CAS Nr. 32131-17-2] eingesetzt. Insbesondere besonders bevorzugt wird Polyamid 6 eingesetzt. Erfindungsgemäß einzusetzendes Polyamid 6 oder Polyamid 66 ist beispielweise bei der Lanxess Deutschland GmbH, Köln unter der Bezeichnung Durethan® erhältlich. Die im Rahmen der vorliegenden Anmeldung benutzte Kennzeichnung der Polyamide entspricht EN ISO 1874-1:2010, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des Polyamid 6, so bedeutet dies, dass von einer $\alpha,\omega$-Amino-carbonsäure bzw. von dem davon abgeleiteten Lactam, im Falle des Polyamid 6 also dem $\varepsilon$-Caprolactam, aus-gegangen worden ist.

Besonders geeignet sind Polyamide mit einer relativen Lösungsviskosität in m-Kresol im Bereich von 2,0 bis 4,0 bevorzugt im Bereich von 2,2 bis 3,5 ganz besonders im Bereich von 2,4 bis 3,1. Die Messung der relativen Lö-sungsviskosität $\eta_{rel}$ erfolgt gemäß EN ISO 307. Das Verhältnis der Auslaufzeit t des in m-Kresol gelösten Polyamids zur Auslaufzeit t (0) des Lösungsmittels m-Kresol bei 25°C ergibt die relative Lösungsviskosität gemäß der Formel $\eta_{rel}$ = t/t(0).

Besonders geeignet sind zudem Polyamide mit einer Zahl an Aminoendgruppen im Bereich von 25 bis 90 mmol/kg, bevorzugt im Bereich 30 bis 70 mmol/kg, ganz besonders im Bereich von 35 bis 60 mmol/kg.

Ganz besonders bevorzugt werden teilkristalline Polyamide oder darauf basierende Compounds als Polymer-Zusammensetzung eingesetzt. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Die erfindungsgemäß einzusetzende Polymer-Zusammensetzung enthält wenigstens ein(en) Zusatzstoff oder Additiv, besonders bevorzugt wenigstens ein Additiv aus der Gruppe Ultraviolettlicht-Stabilisatoren, Flammschutzmittel, verlaufsfördernde Additive, Gleitmittel, Antistatika, Färbemittel, vorzugsweise Farbstoffe, Pigmente, Ruß, Keimbildner, kristallisationsfördernde Mittel, Füllstoffe und andere Verarbeitungshilfsmittel oder deren Mischungen. Diese Additive und anderen Bestandteile können in Mengen und in Formen eingesetzt werden, wie sie dem Fachmann allgemein bekannt sind, einschließlich in Form von sogenannten Nano-Materialien, bei denen mindestens eine Abmessung der Teilchen im Bereich von 1 bis 1000 nm vorliegt. Vorzugsweise werden im mit dem wenigstens einen Polymer in der Polymer-Zusammensetzung Füllstoffe eingesetzt, insbesondere Kurzglasfasern.

Die Additive werden im Thermoplasten der Polymer-Zusammensetzung dispergiert. Das Dispergieren erfolgt mittels eines Schmelzmischverfahrens. Für ein solches Schmelzmischverfahren einzusetzende Mischwerkzeuge sind vorzugsweise Einzel- oder Doppelschneckenextruder oder Banbury-Mischer. Die Additive werden entweder alle auf einmal in einer einzigen Stufe oder schrittweise und dann in der Schmelze vermischt. Beim schrittweise Hinzufügen der Additive zum wenigstens einen Polymer wird zunächst ein Teil der Additive zum Polymer gegeben und in der Schmelze vermischt. Anschließend werden weitere Additive zugegeben und dann solange gemischt, bis eine homogene Zusammensetzung erhalten wird.

Besonders bevorzugt werden die Additive im Thermoplasten in einem vorgelagerten Schritt dispergiert und compoundiert. Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. Das Dispergieren erfolgt vorzugsweise mittels eines Schmelzmisch-verfahrens in wenigstens einem Mischwerkzeug. Mischwerkzeuge sind vorzugsweise Einzel- oder Doppelschneckenextruder oder Banbury-Mischer. Die einzelnen Komponenten der Polymer-Zusammensetzung werden in wenigstens einem Mischwerkzeug, bevorzugt bei Temperaturen im Bereich um den Schmelzpunkt des Polyamid 6 oder des Polyamid 66 in der Polymer-Zusammensetzung gemischt und als Strang ausgetragen. Üblicherweise wird der Strang bis zur Granulierfähigkeit abgekühlt und dann granuliert.

Erfindungsgemäß wird die Polymer-Zusammensetzung als Mikrogranulat eingesetzt. Im Gegensatz zum Stand der Technik, dem Einsatz einer Polymer-Zusammensetzung in Form von gemahlenem Pulver, kann im Falle von Mikrogranulaten auf einen vorgelagerten Bearbeitungsschritt, nämlich das Vermahlen der Polymer-Zusammensetzung verzichtet werden. Vor dem Vermahlen liegt die Polymer-Zusammensetzung in der Regel als Granulat, Flakes oder andere makroskopische Teile vor. Das Mahlen erzeugt Wärme und diese wiederum lässt das Mahlgut in der Mühle verkleben und zusammenklumpen. Im Stand der Technik behilft man sich damit, dass man das Mahlen bei tiefen Temperaturen, als kryogenes Mahlen, durchführt. Die hierfür erforderliche Kühlung sowie der zusätzliche Mahlschritt selber verteuern das Verfahren zur Herstellung von Faser-Matrix-Halbzeugen und führen zu weiteren Nachteilen.

**Mikrogranulat**

Ein Mikrogranulat im Sinne der vorliegenden Erfindung hat eine mittlere Korngröße im Bereich von 0,01 bis 3 mm, besonders bevorzugt im Bereich von 0,1 bis 2 mm und ganz besonders bevorzugt im Bereich von 0,2 bis 1,2 mm, wobei mittlere Korngröße bedeutet, dass die Summe der Massenanteile der Kornfraktionen mit Korngrößen größer als die mittlere Korngröße 50% beträgt. Entsprechend beträgt die Summe der Massenanteile der Kornfraktionen mit Korngrößen kleiner oder gleich der mittleren Korngröße ebenfalls 50%.Die Korngrößen werden mittels Trocken-Siebanalyse gemäß DIN 53477 bestimmt. Die Siebgutmenge beträgt dabei vorzugsweise jeweils 100 g. Unter der Angabe Korngröße wird der Äquivalentdurchmesser der volumengleichen Kugel verstanden und dieser entspricht der Nennweite der Analysensieböffnung. Beispielhaft können entsprechende Siebmaschinen der Firma Karg Industrietechnik (Krailling) verwendet werden.

Die Mikrogranulate haben vorzugsweise die gleiche Form. In einer Ausführungsform kann eine Mischung aus zwei oder mehr, beispielsweise drei oder vier Mikrogranulaten eingesetzt werden, die sich in Bezug auf ihre Form voneinander unterscheiden. Die Mikrogranulate können beispielsweise kugelförmig bzw. ellipsoid (Linsen-förmig), würfelförmig oder zylindrisch sein. Es können auch Mischungen verwendet werden, bei denen die Mikrogranulate aus unterschiedlichen Formmassen und/oder unterschiedlichen Korngrößen und/oder unterschiedlichen Verteilungsbreiten der Korngrößen sind und sich in ihrer Form voneinander unterscheiden.

Bevorzugt haben erfindungsgemäß einzusetzende Mikrogranulate eine zylindrische Form. Das Verhältnis von Zylinderhöhe zu Zylinderdurchmesser liegt vorzugsweise im Bereich von 10 bis 0,5, besonders bevorzugt im Bereich von 5 bis 1.

Bevorzugt haben erfindungsgemäß einzusetzende Mikrogranulate aber auch eine kugelige bzw. ellipsoide Form.

Erfindungsgemäß einzusetzende Mikrogranulate weisen eine Schüttdichte im Bereich von 200 bis 1800 g/l, besonders bevorzugt im Bereich von 500 bis 1000 g/l auf. Die Bestimmung der Schüttdichte erfolgt, indem ein Messzylinder mit dem Mikrogranulat bei Raumtemperatur bis zu einem Liter gefüllt und anschließend diese Menge Mikrogranulat ausgewogen wird. Schüttdichten werden im Rahmen der vorliegenden Erfindung nach EN ISO 60, vorzugsweise mit einem Schüttdichte Messgerät SMG 697 der Powtec Maschinen & Engineering GmbH, Remscheid, bestimmt.

Erfindungsgemäß einzusetzende Mikrogranulate werden vorzugsweise aus der Schmelze der Polymer-Zusammensetzung hergestellt: Nach der Polymerisierung, Compoundierung oder dem Aufschmelzen liegt der Kunststoff im Extruder zunächst als Schmelze vor. In einem bevorzugten Verfahren wird diese über Düsen zu Strängen geformt und in Luft oder Wasser abgekühlt. In einem besonders bevorzugten Verfahren schneidet anschließend ein rotierendes Messer die Stränge in kurze Abschnitte, die dann als Mikrogranulat vorliegen. Dieses lässt sich nun in Rohrleitungen transportieren oder in Säcke oder andere Gebinde verpacken. In einem anderen bevorzugten Verfahren werden aus der Schmelze kleine Tröpfchen geformt, die anschließend abkühlen und erstarren.

Die für die Mikrogranulate einzusetzenden Polymer-Zusammensetzungen können wenigstens einen Zusatzstoff enthalten. Entweder erfolgt die Zugabe wenigstens eines Zusatzstoffes im Zuge des Aufschmelzens für die Mikrogranulierung oder aber der wenigstens eine Zusatzstoff wird bereits bei der Herstellung der Polymer-Zusammensetzung zugegeben. Ebenso kann ein Teil der Zusatzstoffe während der Herstellung der Polymerisate zugegeben werden, ein weiterer Teil der Zusatzstoffe später eingearbeitet werden. Die Einarbeitung wenigstens eines Zusatzstoffs und/oder die Herstellung der Polymer-Zusammensetzung durch Mischung unterschiedlicher Polymerisate kann z. B. oberhalb deren Erweichungstemperatur und in üblichen Mischvorrichtungen wie Extrudern oder Knetern erfolgen. Anschließend wird die plastifizierte Polymer-Zusammensetzung als Formmasse durch wenigstens eine Düse oder Lochplatte gepresst. Dabei hat die Düse oder haben die Bohrungen der Lochplatte einen Durchmesser, der dem späteren Durchmesser des Mikrogranulats entspricht oder kleiner ist als dieser. In der Regel hat die Düse oder haben die Bohrungen einen Durchmesser der kleiner ist als der Durchmesser des Mikrogranulats. Vorzugsweise liegt das Verhältnis von Düsen- oder Bohrungsdurchmesser zu Durchmesser des Mikrogranulats im Bereich von 0,5:1 bis 0,8:1. Vorzugsweise wird der Austrag aus der Düse oder aus der Lochplatte unter Wasser oder an Luft granuliert. Die Temperatur der Schmelze der Polymer-Zusammensetzung liegt beim Austrag im Bereich um dem Schmelzpunkt des wenigstens einen Polymers oder etwas darüber. Es ist auch möglich, einen, mehrere oder eine Vielzahl von Strängen gleichzeitig auszutragen, diese in Wasser zu kühlen und anschließend zu den Mikrogranulaten zu zerteilen.

Erfindungsgemäß einzusetzende Mikrogranulate werden vorzugsweise direkt aus der Schmelze hergestellt, die bei der Herstellung der Polymer-Zusammensetzung anfällt. So wird ein zusätzlicher Granulierungs- und Wiederaufschmelzprozess vermieden.

Die erfindungsgemäß einzusetzenden Mikrogranulate weisen in der Regel sehr kleine Restgehalte an verdampfbaren Monomeren auf, die aus der Herstellung der Formmasse aus der Polymer-Zusammensetzung stammen.

Für den Einsatz im erfindungsgemäßen Verfahren enthalten die Mikrogranulate im Allgemeinen nur eine geringe Restfeuchte. Der Restwassergehalt beträgt nicht mehr als 0,3 Gew.-%, bevorzugt nicht mehr als 0,2 Gew.-%, insbesondere nicht mehr als 0,1 Gew.-%, jeweils bezogen auf das Gesamtgewicht. Der Restwassergehalt wird dabei mittels einer Thermowaage, beispielsweise Sartorius MA 30, anhand von Proben eines Gewichts im Bereich von ca. 1 bis 5 g bestimmt, indem das Ausgangsgewicht der Proben bestimmt wird, die Proben bei 160°C für eine Dauer von 20 Minuten getrocknet werden und der Gewichtsverlust bestimmt wird.

Vorzugsweise haben erfindungsgemäß einzusetzende Mikrogranulate eine Shorehärte A von mehr als 90° und eine Shorehärte D von mehr als 60°. Die Bestimmung der Shorehärte erfolgt nach DIN 43505 mit Prüfgerät A bzw. Prüfgerät D.

Im Falle einer Ausführungsform bei der die Mikrogranulate in der Draufsicht einen Kreisquerschnitt aufweisen, haben wenigstens 90% der erfindungsgemäß einzusetzenden Mikrogranulate einen Konturwinkel >90°, besonders bevorzugt >105°, insbesondere bevorzugt >120°, wobei die Geometriebestimmung durch grafische zweidimensionale Auswertung anhand von Mikroskopieaufnahmen der Mikrogranulate erfolgt. Die maximale Abweichung von der idealen Geometrie wird dadurch ermittelt, dass Bereiche in denen die Teilchenkontur sehr unstetig verläuft, durch geeignete Sehnen approximiert und vermessen wird. Definitionsgemäß liegt bei einer Abweichung des von zwei Sehnen gebildeten Winkels $\alpha$ von <162° keine ideale Kreisform mehr vor. Die Wahl der geeigneten Sehnenlänge s erfolgt über den Einheitskreis mit Radius $r = 1$. Der Kreis wird in 20 gleichgroße Segmente eingeteilt, so dass jedes Element einem 18° großen Kreisabschnitt entspricht (360° : 20). Aus $s = r \cdot sin\,(\alpha)\,/\,cos\,(\alpha/2)$ mit $\alpha$ = 18° und $r = D/2$ ergibt sich $s = D \cdot 0{,}156$, wobei $D$ dem maximalen Partikeldurchmesser bzw. der maximalen Partikelausdehnung entspricht. Vorzugsweise erfolgt die Herstellung erfindungsgemäß einzusetzender Microgranulate durch Unterwassergranulierung, wobei zuvor eine Compoundiereinheit, vorzugsweise ein zweiwelliger Schneckenkneter (ZSK) die Polymer-Zusammensetzung bei Schmelztemperatur vermengt und mischt. Am Austritt der Compoundiereinheit befindet sich eine Düsenplatte oder Lochplatte, durch die die schmelzeförmige Polymer-Zubereitung gepresst wird, im dahinterliegenden Wasserbad erstarrt und durch rotierende Messer konfektioniert wird. Die Größe der Mikropartikel ist von der Wahl der Düsen-/Lochplatte und von der Drehzahl und damit der Schnittfrequenz der rotierenden Messer abhängig. Die Wahl der geeigneten Schnittfrequenz bzw. Drehzahl der rotierenden Messer sowie Messerklingen, die Größe und Anzahl der Bohrungen in der Düsen-/Lochplatte, die Wassertemperatur und die Verarbeitungstemperatur sowie Durchsatzmenge der Polymer-Zubereitung wird der Fachmann im Hinblick auf den jeweils einzusetzenden Thermoplasten anpassen. Erfindungsgemäß geeignete Prozesssysteme für die Mikrogranulattechnik sind erhältlich bei Gala Industries Inc., Eagle Rock, VA, USA (Produktbroschüre Juni 2013).

**Verfahrensschritt c)**

Der Auftrag des Mikrogranulats auf die Fasermaterialien im Verfahrensschritt c) erfolgt mittels konventioneller Mittel, vorzugsweise durch Streuen, Rieseln, Drucken, Spritzen, Sprühen, thermisches Spritzen oder Flammspritzen, oder durch Fließbett-Beschichtungsverfahren. In einer Ausführungsform können mehrere Mikrogranulatschichten auf das Fasermaterial aufgebracht werden.

Vorzugsweise erfolgt der Auftrag des Mikrogranulats auf die Fasermaterialien in Mengen woraus ein nach DIN 1310 definierter Volumenanteil an Fasermaterialien im Faser-Matrix-Halbzeug im Bereich von 25 bis 80%, besonders bevorzugt im Bereich von 40 bis 60%, resultiert.

In einer Ausführungsform kann dem Auftrag ein Sinterschritt folgen, bei dem das Mikrogranulat auf dem Fasermaterial gesintert wird. Durch das Sintern, gegebenenfalls unter Druck, wird das Mikrogranulat erhitzt, wobei die Temperatur jedoch unterhalb der Schmelztemperatur des jeweils einzusetzenden Polymers bleibt. Dabei kommt es in der Regel zu einer Schwindung, weil sich die Mikrogranulatpartikel des Ausgangsmaterials verdichten und Porenräume im Fasermaterial aufgefüllt werden.

Anschließend werden die Mikrogranulat beschichteten Fasermaterialien im Verfahrensschritt d) dem dem Einfluss von Druck und Temperatur unterzogen. Vorzugsweise erfolgt dies unter Vorwärmen der mit Mikrogranulat beschichteten Fasermaterialien außerhalb des Druckzone.

**Verfahrensschritt d)**

Im Verfahrensschritt d) wird das mit Mikrogranulat beschichtete Fasermaterial aufgeheizt, um die vollständige Imprägnierung und die sich daran anschließende Konsolidierung des Fasermaterials einzuleiten. Zusätzlich wird Druck angewandt.

. Durch den Einfluss von Druck und Wärme schmilzt das wenigstens eine Polymer der Polymer-Zusammensetzung bzw. die Polymer-Zubereitung und durchdringt die Fasermaterialien, die sie damit imprägniert. Durch Entweichen von vorhandenem oder sich dabei bildendem Gas aus den Hohlräumen zwischen Fasermaterial und Polymer-Zusammensetzung findet die Konsolidierung statt. Die Gase enthalten Gas der Umgebung (z. B. Luft oder Stickstoff) und / oder Wasser (Dampf) und/oder thermische Zersetzungsprodukte des einzusetzenden wenigstens einen Polymers.

Vorzugsweise wird im Verfahrensschritt d) ein Druck im Bereich von 2 bis 100 bar, besonders bevorzugt im Bereich von 10 bis 40 bar angewandt.

Die im Verfahrensschritt d) anzuwendende Temperatur ist ≥ der Schmelztemperatur des wenigstens einen einzusetzenden Polymers bzw. der Polymer-Zusammensetzung. In einer Ausführungsform liegt die anzuwendende Temperatur mindestens 10°C über der Schmelztemperatur des wenigstens einen einzusetzenden Polymers. In einer weiteren Ausführungsform liegt die anzuwendende Temperatur mindestens 20°C über der Schmelztemperatur des wenigstens einen einzusetzenden Polymers. Die Beheizung kann durch eine Vielzahl von Mitteln erfolgen, vorzugsweise Kontaktheizung, strahlende Gasheizung, Infrarotheizung, Konvektion oder erzwungene Konvektion, Induktionsheizung, Mikrowellenheizung oder Kombinationen davon. Im unmittelbaren Anschluss daran erfolgt die Konsolidierung.

Die Vorgänge der Imprägnierung und Konsolidierung sind insbesondere abhängig von den Parametern Temperatur und Druck. In einer Ausführungsform ist der anzuwendende Druck zusätzlich noch von der Zeit abhängig.

Vorzugsweise werden die genannten Parameter angewandt, bis das Faser-Matrix-Halbzeug einen Hohlraumgehalt von weniger als 5% aufweist - gemeint ist hier der Volumenanteil an Luft oder Gas -. Besonders bevorzugt wird angestrebt, dass der Hohlraumgehalt von weniger als 5% innerhalb einer Zeitdauer von weniger als 10 Minuten, bei Temperaturen oberhalb 100°C erzielt wird, besonders bevorzugt bei Temperaturen im Bereich von 100°C bis 350°C. Vorzugsweise werden Drücke oberhalb von 20 bar angewandt.

Die Druckbeaufschlagung kann durch ein statisches Verfahren oder durch ein kontinuierliches Verfahren (auch als dynamischer Prozess bekannt) erfolgen, wobei ein kontinuierliches Verfahren aus Geschwindigkeitsgründen bevorzugt ist. Der Fachmann unterscheidet bei der Herstellung thermoplastischer FKV-Plattenhalbzeuge (FKV = Faser-Kunststoff-Verbund) in Abhängigkeit von den zu erzielenden Materialdurchsätzen die Verfahrenstypen Film-Stacking-, Prepreg- und Direktverfahren. Vorzugsweise wird das erfindungsgemäße Imprägnierverfahren im Hinblick auf hohen Materialdurchsatz nach dem Direktverfahren durchgeführt, bei dem die Matrix- und die Textilkomponente direkt im Bereich des Materialeinlaufs des Pressprozesses zusammengeführt wird. Vorzugsweise handelt es sich bei dem Direktverfahren um einen semi-kontinuierlichen oder kontinuierlichen Prozess, besonders bevorzugt um einen kontinuierlichen Prozess.

Vorzugsweise handelt es sich dabei um ein Imprägnierungsverfahren aus der Gruppe - ohne Einschränkung - Vakuumformen, Beschichten in einer Form, Quer-Matrize-Extrusion, Pultrusion, Laminieren, Prägen, Membranformen, Preßformen (Compression Molding). Erfindungsgemäß bevorzugt ist die Laminierung.

Bevorzugte Laminierungstechniken umfassen ohne Einschränkung Kalander, Flachbett-Laminierung und Doppelbandpresse-Laminierung. Wenn das Laminieren als Imprägnierungsverfahren verwendet wird, ist vorzugsweise eine gekühlte Doppelbandpresse einzusetzen (siehe auch EP 0 485 895 B1).

In einer Ausführungsform kann im Verfahrensschritt d) die Verbundstruktur durch ein gleichzeitig anzuwendendes Formgebungsverfahren in eine gewünschte Geometrie oder Konfiguration geformt werden. Bevorzugte Formgebungsverfahren für die geometrische Gestaltung der Verbundstruktur sind Formpressen, Stanzen, Pressen oder jedes Verfahren unter Verwendung von Wärme und / oder Druck. Besonders bevorzugt sind Pressen und Stanzen. Vorzugsweise wird beim Formgebungsverfahren der Druck durch die Verwendung einer hydraulischen Formpresse aufgetragen. Beim Pressen oder Stanzen wird die Verbundstruktur auf eine Temperatur oberhalb der Schmelztemperatur des wenigstens einen Polymers in der Polymer-Zusammensetzung vorgewärmt und mit einer Form-, einer Formungseinrichtung oder einem Formwerkzeug, insbesondere wenigstens einer Formpresse, in die gewünschte Form bzw. Geometrie gebracht.

Zur Erzielung optimaler mechanischer Eigenschaften ist eine möglichst vollständige Imprägnierung der Filamente des Fasermaterials mit dem wenigstens einen Polymer bzw. der Polymer-Zusammensetzung wünschenswert. Es wurde gefunden, dass bei Anwesenheit von Fasermaterial aus Glasfasern eine schnelle Imprägnierungsrate von Fasermaterial aus Kohlenstofffasern erfolgt, was zu einem insgesamt schnelleren Gesamtherstellungszyklus von Faser-Matrix-Halbzeugen führt, die sowohl Glas-, als auch Kohlenstofffasern enthalten.

Zeitgleich zur Imprägnierung oder im Anschluss an die Imprägnierung findet die Konsolidierung statt, worunter man das Exprimieren von eingeschlossener Luft und anderen Gasen versteht. Auch die Konsolidierung ist insbesondere abhängig von den Parametern Temperatur und Druck sowie zusätzlich vom Parameter der Zeit, also die Dauer, währenddessen Druck und Temperatur auf Polymer-Zusammensetzung und Faserhalbzeug einwirken.

Das Prinzip des Imprägnierens besteht im Tränken einer trockenen Faserstruktur mit einer Matrix aus Polymer bzw Polymer-Zubereitung, die erfindungsgemäß zuvor als Mikrogranulat bereit gestellt wurde. Das Durchströmen des Faserhalbzeugs ist mit dem Fließen eines inkompressiblen Fluids durch ein poröses Grundmedium vergleichbar. Die Strömung wird mit Hilfe der Navier-Stokes Gleichung beschrieben:

$$\rho \frac{dv}{dt} = -\nabla P + \eta \nabla^2 v$$

worin $\rho$ die Dichte, $v$ den Geschwindigkeitsvektor, $\nabla P$ den Druckgradienten und $\eta$ die Viskosität des verwendeten Fluids dar. Geht man davon aus, dass die Strömungsgeschwindigkeit des Polymers bzw. der Polymer-Zubereitung - auch als Matrix bezeichnet - in der Verstärkungsstruktur als gering einzustufen ist, können die Trägheitskräfte in obiger Gleichung (deren linke Seite) vernachlässigt werden. Folglich vereinfacht sich die Gleichung zu der als Stokes-Gleichung bekannten Form:

$$0 = -\nabla P + \eta \nabla^2 v$$

Beide Eigenschaften, der Grad der Imprägnierung und der Konsolidierung, lassen sich durch die Bestimmung mechanischer Kennwerte messen bzw. überprüfen, insbesondere durch Messung der Zugfestigkeit an Verbundstrukturprobekörpern. Zur Ermittlung der Zugfestigkeit dient der Zugversuch, ein quasistatisches, zerstörendes Prüfverfahren, im Falle von Kunststoffen nach ISO 527-4 oder -5.

In der voll-imprägnierten und voll-konsolidierten Form erfüllen die Fasern des eingesetzten Fasermaterials die Aufgabe, der zu erzeugenden Verbundstruktur Festigkeit und Steifigkeit zu verleihen, wohingegen die Matrix aus wenigstens einem Polymer bzw. der Polymer-Zusammensetzung im Vergleich zu den eher spröden Fasern die Bruchdehnung der Verbundstruktur positiv beeinflusst. Durch die unterschiedliche Orientierung der Fasern, zum Beispiel in Form eines Gewebes, kann speziellen Lastfällen entgegen gewirkt werden (Anisotropie). Eine Isotropie kann zum Beispiel durch die Nutzung eines Wirrfaservlieses erreicht werden.

Da sowohl der Vorgang der Imprägnierung als auch der Vorgang der Konsolidierung von den Parametern Temperatur und Druck abhängig sind, wird der Fachmann diese Parameter dem jeweils einzusetzenden Polymer bzw. der Polymer-Zusammensetzung anpassen. Zudem wird er auch den Zeitraum, über den der Druck sowie die Temperatur angewandt wird, entsprechend dem einzusetzenden Polymer bzw. der Polymer-Zusammensetzung anpassen.

**Verfahrensschritt e)**

Nach dem Konsolidieren lässt man die im Verfahrensschritt d) erhaltene Faserverbundstruktur auf eine Temperatur unterhalb der Schmelztemperatur des Matrixharzes (=Polymer) bzw. der Matrixharz-Zusammensetzung (=Polymer-Zusammensetzung) abkühlen, auch als Solidifikation bezeichnet, und entnimmt die Faserverbundstruktur in Form eines erfindungsgemäßen Faser-Matrix-Halbzeugs aus der Presse. Der Begriff der Solidifikation beschreibt das Erstarren des Gemisches aus Faserstruktur und flüssiger Matrix durch Abkühlen oder durch chemische Vernetzung zu einem Festkörper. Vorzugsweise fällt das erfindungsgemäße einschichtige Faser-Matrix-Halbzeug beim Einsatz einer Doppelbandpresse als Plattenware an.

Erfolgte gleichzeitig eine Formgebung, so wird nach dem Abkühlen auf eine Temperatur unterhalb der Schmelztemperatur des Matrixharzes bzw. der Matrixharz-zusammensetzung, vorzugsweise auf Raumtemperatur (23 +/- 2°C), die Faserverbundstruktur der Form entnommen.

Bei der Herstellung thermoplastischer FKV-Plattenhalbzeuge wie den erfindungsgemäßen Faser-Matrix-Halbzeugen, wird in Abhängigkeit von den zu erzielenden Materialdurchsätzen in Film-Stacking-, Prepreg- und Direktverfahren unterschieden. Für hohen Materialdurchsatz werden im Fall der Direktverfahren die Matrix- und die Textilkomponente direkt im Bereich des Materialeinlaufs des Pressprozesses zusammengeführt. Dies ist in der Regel mit einem hohen anlagentechnischen Aufwand verbunden. Für geringe bis mittlere Mengen wird neben den Prepregverfahren häufig das Film-Stacking-Verfahren eingesetzt. Hierbei durchläuft ein aus alternierend angeordneten Folien- und Textillagen bestehender Aufbau den Pressprozess. Die Art des Pressprozesses orientiert sich am geforderten Materialausstoß und der Materialvielfalt. Hier unterscheidet man, nach zunehmendem Materialdurchsatz, zwischen statischen, semikontinuierlichen und kontinuierlichen Verfahren. Der anlagentechnische Aufwand und die Anlagenkosten steigen dabei mit der Zunahme des Materialdurchsatzes (AKV-Industrievereinigung Verstärkte Kunststoffe e.V., Handbuch Faserverbund-Kunststoffe, 3. Aufl. 2010, Vieweg-Teubner, 236).

Das erfindungsgemäße Imprägnierverfahren ist besonders gut für halbkontinuierliche oder kontinuierliche Pressverfahren, vorzugsweise in Doppelbandpressen oder in kontinuierlichen Formpressen geeignet. Das erfindungsgemäße Imprägnierverfahren zeichnet sich durch schnelle Imprägnierung und hohe Produktivität aus und erlaubt Faserverbundstrukturen in hohen Raten und geringem Anteil an Poren oder Lufteinschlüssen zu erzeugen.

Vorzugsweise weist ein erfindungsgemäß herzustellendes Faser-Matrix-Halbzeug, also die nach Verfahrensschritt e) erhaltene Verbundstruktur, nur eine Schicht auf, worin die Fasern bzw. das Fasermaterial von der Polymer-Zusammensetzung imprägniert und konsolidiert vorliegen bzw. vorliegt, erfindungsgemäß auch als einschichtiges Faser-Matrix-Halbzeug bezeichnet.

Ein Imprägnierverfahren zur Herstellung eines einschichtigen Faser-Matrix-Halbzeugs umfasst

a) Bereitstellen von 1 bis 100 Faserhalbzeuglagen aus Endlosfasern, vorzugsweise 2 bis 40 Faserhalbzeuglagen aus Endlosfasern, besonders bevorzugt 2 bis 10 Faserhalbzeuglagen aus Endlosfasern, mit jeweils einem Flächengewicht im Bereich von 5 g/m$^2$ bis 3000 g/m$^2$, bevorzugt im Bereich von 100 g/m$^2$ bis 900 g/m$^2$, besonders bevorzugt im Bereich von 150 g/m$^2$ bis 750 g/m$^2$,

b) Bereitstellen einer Polymer-Zusammensetzung in Form eines Mikrogranulats, wobei die Polymer-Zusammensetzung eine Schmelze-Volumenfließrate MVR nach ISO 1133 im Bereich von 50 cm$^3$/10 min bis 500 cm$^3$/10 min, besonders bevorzugt im Bereich von 50 cm$^3$/10 min bis 300 cm$^3$/10 min, ganz besonders bevorzugt im Bereich von 100 cm$^3$/10 min bis 200 cm$^3$/10 min bei einer Last von 5 kg und einer Temperatur von 260°C aufweist,

c) Auftragen des Mikrogranulats auf die Gesamtheit aller Faserhalbzeuglagen,

d) Imprägnieren und Konsolidieren der Gesamtheit aller Faserhalbzeuglagen mit der Polymer-Zusammensetzung zu einem Verbund durch Einwirken von Temperaturen ≥ der Schmelztemperatur der Polymer-Zusammensetzung und Druck auf die mit Mikrogranulat beaufschlagte Gesamtheit aller Faserhalbzeuglagen,

e) Abkühlen bzw. Solidifikation unter Erhalt der Verbundstruktur mit einem nach DIN 1310 definierten Volumenanteil an Fasermaterialien im Bereich von 25 bis 65%, vorzugsweise im Bereich von 30 bis 55%, besonders bevorzugt im Bereich 40 bis 50%, und einem durch Dichtebestimmung nach DIN EN ISO 1183 zu bestimmenden Volumenanteil an Luft oder Gas von weniger als 10%, bevorzugt weniger als 5%,

wobei ein Mikrogranulat ein körniges Haufwerk darstellt, dessen einzelne Teilchen mehr oder weniger eine einheitliche Korngröße aufweisen und als Granulatkörner, Granalien oder Pellets bezeichnet werden und diese eine mittels Trocken-Siebanalyse gemäß DIN 53477 zu bestimmende mittlere Korngröße im Bereich von 0,01 bis 3 mm aufweisen.

Ein Imprägnierverfahren zur Herstellung eines einschichtigen Faser-Matrix-Halbzeugs umfasst auch

a) Bereitstellen eines Endlosfasern enthaltenden Fasermaterials in Form von 1 bis 100 Faserhalbzeuglagen aus Endlosfasern, vorzugsweise 2 bis 40 Faserhalbzeuglagen aus Endlosfasern, besonders bevorzugt 2 bis 10 Faserhalbzeuglagen aus Endlosfasern, ganz besonders bevorzugt von Rovingglasgewebelagen, mit jeweils einem Flächengewicht im Bereich von 5 g/m$^2$ bis 3000 g/m$^2$, bevorzugt im Bereich von 100 g/m$^2$ bis 900 g/m$^2$, besonders bevorzugt im Bereich von 150 g/m$^2$ bis 750 g/m$^2$,

b) Bereitstellen einer Polyamid 6-Zusammensetzung in Form eines Mikrogranulats,

c) Auftragen des Mikrogranulats auf die Gesamtheit aller Faserhalbzeuglagen,

d) Imprägnieren und Konsolidieren der Gesamtheit aller Faserhalbzeuglagen mit der Polymer-Zusammensetzung zu einem Verbund durch Einwirken von Temperaturen ≥ der Schmelztemperatur der Polyamid 6-Zusammensetzung und Druck auf die mit Mikrogranulat beaufschlagte Gesamtheit aller Faserhalbzeuglagen,

e) Abkühlen bzw. Solidifikation unter Erhalt der Verbundstruktur mit einem nach DIN 1310 definierten Volumenanteil an Fasermaterialien im Bereich von 25 bis 65%, vorzugsweise im Bereich von 30 bis 55%, besonders bevorzugt im Bereich 40 bis 50%, und einem durch Dichtebestimmung nach DIN EN ISO 1183 zu bestimmenden Volumenanteil an Luft oder Gas von weniger als 10%, bevorzugt weniger als 5%,

wobei ein Mikrogranulat ein körniges Haufwerk darstellt, dessen einzelne Teilchen mehr oder weniger eine einheitliche Korngröße aufweisen und als Granulatkörner, Granalien oder Pellets bezeichnet werden und diese eine mittels Trocken-Siebanalyse gemäß DIN 53477 zu bestimmende mittlere Korngröße im Bereich von 0,01 bis 3 mm aufweisen.

Erfindungsgemäß aus Mikrogranulat herzustellende Faser-Matrix-Halbzeuge können für eine Vielzahl von Anwendungen eingesetzt werden. Vorzugsweise werden sie im Automotive Bereich als Komponenten für Pkw, Lkw, Verkehrsflugzeuge, in der Luft- und Raumfahrt, in der Bahn, aber auch für Garten- und Haushaltsgeräte, als Computer-Hardware, in handgeführten elektronischen Geräten, in Freizeitartikeln und Sportgeräten, als Strukturbauteile für Maschinen, in Gebäuden, in Photovoltaikanlagen oder in mechanische Vorrichtungen eingesetzt.

Schließlich betrifft die vorliegende Erfindung die Verwendung einer Polymer-Zusammensetzung in Form von Mikrogranulat mit einer mittleren Korngröße im Bereich von 0,01 bis 3 mm, die mittels Trockensiebanalyse gemäß DIN 53477 bestimmt wird, zur Herstellung eines Faser-Matrix-Halbzeugs, aus wenigstens einem Endlosfasern enthaltenden Fasermaterial, wobei das Mikrogranulat eine Schüttdichte im Bereich von 200 bis 1.800 g/l aufweist, die nach EN ISO 60 bestimmt wird und das Mikrogranulat einen Gehalt an Restfeuchte von nicht mehr als 0,3 Gew.-% bezogen auf das Gesamtgewicht aufweist und der Restwassergehalt mittels Thermowaage anhand von Proben eines Gewichts im Bereich von ca. 1 bis 5 g bestimmt wird, indem das Ausgangsgewicht bestimmt wird, die Proben bei 160°C für die Dauer von 20 Minuten getrocknet werden und der Gewichtsverlust bestimmt wird, und man das Mikrogranulat durch Mischen der einzelnen Komponenten der Polymer-Zusammensetzung in wenigstens einem Mischwerkzeug, Austragen der Mischung als Strang, Abkühlen des Strangs bis zur Granulierfähigkeit und granulieren desselben erhält, und das Fasermaterial ein Gewebe ist und als Polymer-Zusammensetzung eine aus wenigstens Polyamid 6 oder Polyamid 66 eingesetzt wird.

**Beispiele**

Unter Verwendung der beschriebenen Verfahrensschritte a) bis e) wurde ein Faser-Matrix-Halbzeug hergestellt, wobei unter Verfahrensschritt c) einmal gemahlene Polymer-Zusammensetzung (Vergleichsversuch) und das andere Mal Polymer-Zusammensetzung in Form von Mikrogranulat (erfindungsgemäßes Beispiel) verwendet wurde.

Als Faserhalbzeug wurde ein Köpergewebe aus Filamentglas mit Webart Twill2/2 mit Silanschlichte und einem Flächengewicht von 290 g/m$^2$ eingesetzt.

Der Auftrag des Mikrogranulats bzw. der gemahlenen Polymer-Zusammensetzung auf die Fasermaterialien erfolgte in Mengen, woraus ein nach DIN 1310 definierter Volumenanteil an Fasermaterialien im Faser-Matrix-Halbzeug von 45% resultierte.

Die Faser-Matrix-Halbzeuge wurden durch Heißverpressen von Fasermaterial und Thermoplast-Matrix bei Temperaturen im Bereich von 290°C bis 320°C hergestellt.

A) Pulver (kryogen gemahlen) einer Polymer-Zusammensetzung auf Basis von Polyamid mit einer mittleren Körngröße von 0,7 mm.

B) Mikrogranulat (zylindrische Form und ellipsoide Form) einer Polymer-Zusammensetzung auf Basis von Polyamid mit einer mittleren Korngröße von 0,7 mm.

**Tabelle 1:** Vergleich der Resultate aus Pulverauftrag und Mikrogranulatauftrag

|  | A (Vergleichsbeispiel) | B (erfindungsgemäßes Beispiel) |
|---|---|---|
| Reinheit der Polymer-Zusammensetzung | - (Pulver wies Verunreinigungen in nach dem Mahlen auf) | + (Mikrogranulat wies keine Verunreinigungen auf) |
| Energieaufwand zur Herstellung des Faser-Matrix-Halbzeugs | - (höherer Energieaufwand durch Mahlvorgang und bei Herstellung des Faser-Matrix-Halbzeuges) | + (niedrigerer Energieaufwand bei Herstellung des Faser-Matrix-Halbzeugs aus Mikrogranulat) |

(fortgesetzt)

| | A (Vergleichsbeispiel) | B (erfindungsgemäßes Beispiel) |
|---|---|---|
| Staubentwicklung bei Herstellung des Faser-Matrix-Halbzeugs | - (sichtbare Staubentwicklung) | + (Staubentwicklung nicht sichtbar) |
| Feuchtigkeitsaufnahme der Polymer-Zusammensetzung | - (Mahlgut wies höhere Feuchte auf) | + (Mikrogranulat wies niedrigere Feuchte auf) |
| Oberflächenqualität des Faser-Matrix-Halbzeugs | - (Inhomogenitäten auf der Oberfläche erkennbar) | + (weniger Inhomogenitäten auf der Oberfläche erkennbar) |
| Zugfestigkeit des Faser-Matrix-Halbzeugs | - | + (gegenüber Vergleichsbeispiel erhöhte Zugfestigkeit) |

**Prüfung der Delamination**

Zum Nachweis, dass ein erfindungsgemäßes einschichtiges Faser-Matrix-Halbzeug weniger zur Delamination neigt, als ein mehrschichtiges Composite gemäß dem Stand der Technik, wurden Prüfkörper einer mechanischen Prüfung unterzogen und daraus die Verbundfestigkeit anhand von Zugversuchen nach EN ISO 527 zur Bestimmung der Bruchspannung, der Bruchdehnung sowie des E-Moduls bei definierter Temperatur ermittelt. Die EN ISO 527-1 (letzte Ausgabe vom April 1996, aktuelle ISO-Version Februar 2012) ist eine Europäische Norm für Kunststoffe zur Bestimmung der Zugeigenschaften, welche durch einen Zugversuch mit einer Zugprüfmaschine ermittelt werden. Hierzu wurde eine speziell konzipierte Prüfkörperaufnahme verwendet, die ein einfaches Einschieben und Fixieren der als Prüfkörper verwendeten Kopfzugprobe bei Zugbelastung ermöglichte.

Die Prüfung wurde auf einer Universalprüfmaschine vom Typ Zwick UTS 50 der Firma Zwick GmbH & Co. KG, Ulm, durchgeführt, wobei die Krafteinleitung durch einen mechanischen Spannkopf erfolgte. Jeder Prüfkörper, im Folgenden als Kopfzugprobe bezeichnet, bestand aus einem Faser-Matrix-Halbzeug-Streifen ($55 \times 40 \times 2$ mm$^3$), auf den eine Rippe ($40 \times 40 \times 4$ mm$^3$) aus Polyamid 6 gespritzt war.

**EINSATZSTOFFE**

**Thermoplastische Matrix 1: Polyamid 6 (PA6)**

**Polyamid 6:** Spritzgußtyp, leichtfließend, feinkristallin und sehr rasch verarbeitbar (BASF Ultramid® B3s) mit einer Dichte von 1,13 g/cm$^3$ und einem Fließindex MVR von 160 cm$^3$/10 min [Messbedingungen: ISO1133, 5 kg, 275°C] bzw. einer relativen Viskositätszahl (0.5% in 96% $H_2SO_4$, ISO 307, 1157, 1628) von 145 cm$^3$/g.

**Thermoplastische Matrix 2: Polyamid 6 (PA6)**

**Polyamid 6:** Folientyp, unverstärkt, mittel fließend (BASF Ultramid® B33 L) mit einer Dichte von 1,14 g/cm$^3$ und einer relativen Viskositätszahl (0.5% in 96% $H_2SO_4$, ISO 307, 1157, 1628) von 187-203 cm$^3$/g.

**Faserhalbzeug**

Balanciertes Rovingglasgewebe (YPC ROF RE600) bestehend aus 1200 tex Kett- und Schussfäden in 2/2 Köperbindung mit einer Fadendichte von 2,5 Fäden/cm. Flächengewicht total 600 g/m$^2$, davon 50% in Kett- und 50% in Schussrichtung. Gewebebreite 1265 mm, Rollenlänge 150 lfm. Ausrüstung der Schussfäden mit spezieller Schlichte, die auf das Polymersystem (im Beispielteil Polyamid) angepasst war.

**Compositehalbzeug 1**

Compositehalbzeug 1 wurde auf einer statischen Heizplattenpresse hergestellt. Das Compositehalbzeug 1 mit einer Kantenlänge von 420 mm x 420 mm bestand aus 4 Lagen Faserhalbzeug sowie einer Polymermenge ausschließlich aus der thermoplastischen Matrix 1, die gleichmäßig auf die Faserlagen aufgebracht und verteilt wurde und in einen Faservolumengehalt von 47% bzw. in einer Dicke von 2,0 mm resultierte. Zur Konsolidierung und Imprägnierung wurde ein Flächendruck von 24 bar und eine Temperatur von 300°C für 240s aufgeprägt. Die anschließende Abkühlung auf Raumtemperatur erfolgte bei gleichbleibendem Druck in 300s. Im entstandenen plattenförmigen Compositehalbzeug 1 waren die Faserhalbzeuglagen somit homogen eingebettet, aufgrund des einheitlichen Einschicht-Matrixsystems entstanden keine Material- / Phasengrenzen innerhalb der Matrix; es konnte stofflich nicht zwischen innerer Einbettmasse und Oberfläche unterschieden werden.

**Compositehalbzeug 2**

Compositehalbzeug 2, als Beispiel eines mehrschichtigen Aufbaus gemäß dem Stand der Technik, wurde ebenfalls auf einer statischen Heizplattenpresse hergestellt. Das für den Mehrschichtaufbau vorgesehene Halbzeug mit einer Kantenlänge von 420 mm x 420 mm bestand aus 4 Lagen Faserhalbzeug sowie einer Polymermenge ausschließlich aus der thermoplastischen Matrix 1, die gleichmäßig auf die Faserlagen aufgebracht und verteilt wurde und in einem Faservolumengehalt von 49% bzw. eine Dicke von 1,9 mm resultierte. Zur Konsolidierung und Imprägnierung wurde ein Flächendruck von 24 bar und eine Temperatur von 300°C für 240s aufgeprägt. Die anschließende Abkühlung auf Raumtemperatur erfolgte bei gleichbleibendem Druck in 300s.

Um einen schichtförmigen Aufbau zu erzeugen, wurde auf dieses Halbzeug in einem nachfolgenden Prozessschritt beidseitig eine 50 $\mu$m dicke Folie aus thermoplastischer Matrix 2 aufgebracht. Dies erfolgte wiederum auf einer statischen Heizplattenpresse bei einer Temperatur von 260°C und einem Flächendruck von 9 bar, der für 120 Sekunden aufrecht erhalten wurde. Die Abkühlung auf Raumtemperatur innerhalb von 60s erfolgte bei einem Flächendruck von 7,5 bar. Aufgrund der unterschiedlichen Viskositäten der thermoplastischen Matrizes 1 und 2 kam es zu einem nicht einheitlichen Gefüge des Compositewerkstoffes. Im Inneren des auf diese Weise erzeugten plattenförmigen Compositehalbzeuges 2 waren die Faserhalbzeuglagen homogen in der Matrix 1 eingebettet, während an den beiden Oberflächen (surface) ausschließlich Matrix 2 vorlag, analog der Halbzeuge gemäß WO 2012/132 399 A1 und WO 2010/132 335 A1.

**Prüfung**

Als Prüfkörper für die mechanische Prüfung der Verbundhaftung zwischen Compositehalbzeug und angespritztem Thermoplast kam eine sogenannte Kopfzugprobe zum Einsatz. Jeder dieser Kopfzugproben-Prüfkörper bestand aus einem Compositehalbzeug-Streifen (55 x 40 x 2 mm$^3$), auf den eine Rippe (40 x 40 x 4 mm$^3$) aus Polyamid 6 gespritzt war. Zu Kopfzugprobe siehe auch W. Siebenpfeiffer, Leichtbau-Technologien im Automobilbau, Springer-Vieweg, 2014, Seiten 118 - 120. Beim Kopfzugversuch wird dann die Kopfzugprobe in eine Halterung eingespannt und einseitig mit einer Zugkraft belastet. Der Zugversuch wird in einem Spannungs-DehnungsDiagramm (E-Modul) dargestellt.

Für die im Rahmen der vorliegenden Erfindung durchzuführenden Kopfzugversuche wurde ein jeweils ein erfindungsgemäßes erwärmtes, unverformtes Compositehalbzeug 1 und auch ein Compositehalbzeug 2 mit mehrschichtigem Aufbau gemäß dem Stand der Technik mit jeweils insgesamt 22 identischen Rippen hinterspritzt. Das jeweilige Compositehalbzeug 1 oder 2 wurde zuvor am Punkt des Angusses mit einer 8 mm-Bohrung versehen, damit kein zusätzlicher Widerstand für die anzuspritzende Polyamidschmelze zur Ausbildung von Rippen entstand. Nach der Verarbeitung wurden an ausgewählten Positionen entlang des Fließwegs einzelne, zur Prüfung geeignete Plattenabschnitte mit einer Bandsäge vom Typ "System Flott" der Firma Kräku GmbH, Großseifen, ausgesägt.

Zur mechanischen Prüfung der Verbundfestigkeit wurden Kennwerte aus Zugversuchen an den Kopfzugproben ermittelt. Hierbei wurde eine speziell konzipierte Prüfkörperaufnahme verwendet, die ein einfaches Einschieben und Fixieren der Kopfzugprobe bei Zugbelastung ermöglichte. Die Prüfung wurde auf einer Universalprüfmaschine vom Typ Zwick UTS 50 der Firma Zwick GmbH & Co. KG, Ulm, durchgeführt, wobei die Krafteinleitung durch einen mechanischen Spannkopf erfolgte. Die bei der mechanischen Prüfung angewandten Parameter sind der **Tabelle 2** zu entnehmen.

**Tabelle 2:** Prüfungsparameter im Zugversuch

| Prüfungsparameter | Wert |
|---|---|
| Zustand der Prüfkörper | Trocken (80°C, Vakuumtrockner, ca. 200 h) |
| Prüfgeschwindigkeit [mm/min] | 10 |
| Maximale Kraftaufnahme [kN] | 50 |
| Vorkraft [N] | 5 |

Als Kriterium für die Verbundfestigkeit wurde die im Zugversuch ermittelte maximal gemessene Kraft definiert. Erste messbare Kraftabfälle wurden durch erste Risse im Material, Ablösevorgänge, Verformungen oder ähnliche Effekte vor Erreichen der Maximalkraft verursacht und erschienen als Kriterium für die Verbundfestigkeit ungeeignet. Die maximal gemessene Kraft wurde bei Versagen der Kopfzugprobe erreicht; sie wird deshalb im Folgenden als Bruchkraft bezeichnet. Grundsätzlich ist zu beachten, dass die Maximalkraft neben der Verbundhaftung und der Geometrie stets auch vom Prüfverfahren und den Prüfbedingungen abhängen kann.

Pro Compositehalbzeug wurden jeweils 10 Rippenabzugsprüfungen durchgeführt, um eine statistisch sichere Aussage zu ermöglichen.

## Experimentelle Ergebnisse

Beim Compositehalbzeug 1 (erfindungsgemäß) kam es in allen Fällen zu einem rein kohäsiven Versagen der thermoplastischen Matrix 1 direkt an der obersten Faserhalbzeuglage des Faserhalbzeugs.

Beim Compositehalbzeug 2 (nicht erfindungsgemäß) war dagegen stets ein Mischbruch aus kohäsivem und adhäsiven Versagen in der Grenzschicht zwischen thermoplastischer Matrix 1 und thermoplastischer Matrix 2 zu beobachten. Ein kohäsives Versagen von thermoplastischer Matrix 1 oberhalb der obersten Lage aus Faserhalbzeug war nicht festzustellen.

Beim nicht erfindungsgemäßen Compositehalbzeug 2 war somit die oberflächennahe Schicht (surface) aus thermoplastischer Matrix 2 vom Substrat, bestehend aus Faserhalbzeug und thermoplastischer Matrix 1, abgerissen, während beim erfindungsgemäßen, einschichtigen Compositehalbzeug 1 kein derartiges Trennen innerhalb einer oberflächenparallelen Schicht in der thermoplastischen Matrix 1 zu beobachten war.

**Tabelle 3:** Statistische Zusammenfassung von 10 Rippenabzugsprüfungen

| Nr. | Testergebnis Compositehalbzeug 1 | Testergebnis Compositehalbzeug 2 |
|---|---|---|
| 1 | + | - |
| 2 | + | - |
| 3 | + | - |
| 4 | + | - |
| 5 | + | - |
| 6 | + | - |
| 7 | + | - |
| 8 | + | - |
| 9 | + | - |
| 10 | + | - |

Die Bewertung der Ergebnisse erfolgte nach der Höhe der Abzugskraft. Ein "+" kennzeichnet die jeweils höhere Abzugskraft der beiden miteinander verglichenen Compositehalbzeuge, während ein "-" die niedrigere Kraft kennzeichnet, wobei ein "+" eine um wenigstens 15% höhere Abzugskraft symbolisiert.

Die Prüfungsergebnisse zeigen, dass die Maximalkraft bei den Vergleichen der beiden Compositehalbzeuge beim erfindungsgemäßen einschichtigen Compositehalbzeug 1 stets höher ausfiel, als beim Compositehalbzeug 2 mit geschichtetem Aufbau. Auch der Mittelwert der Einzelprüfungsergebnisse der Messreihe lag beim erfindungsgemäßen, einschichtigen Compositehalbzeug 1 deutlich über dem des Compositehalbzeugs 2.

Zusammengefasst: Die Rippenabzugsfestigkeit beim erfindungsgemäßen, einschichtigen Compositehalbzeug 1 war deutlich höher, als beim Compositehalbzeug 2.

## Patentansprüche

1. Verfahren zur Herstellung eines Faser-Matrix-Halbzeugs umfassend

   a) Bereitstellen wenigstens eines Endlosfasern enthaltenden Fasermaterials,
   b) Bereitstellen einer Polymer-Zusammensetzung in Form eines Mikrogranulats mit einer mittels Trockensiebanalyse gemäß DIN 53477 zu bestimmenden mittleren Korngröße im Bereich von 0,01 bis 3 mm,
   c) Auftragen des Mikrogranulats auf das Fasermaterial,
   d) Imprägnieren und Konsolidieren des Fasermaterials mit der Polymer-Zusammensetzung zu einem Verbund durch Einwirken von Temperaturen ≥ der Schmelztemperatur des wenigstens einen Polymers und Druck auf das mit Mikrogranulat beaufschlagte Fasermaterial,

e) Abkühlen unter Erhalt der Verbundstruktur, wobei das Mikrogranulat eine Schüttdichte von 200 bis 1.800 g/l, die nach EN ISO 60 bestimmt wird und einen Gehalt an Restfeuchte von nicht mehr als 0,3 Gew.-% bezogen auf das Gesamtgewicht aufweist und der Restwassergehalt, mittels Thermowaage anhand von Proben eines Gewichts im Bereich von ca. 1 bis 5 g bestimmt wird, indem das Ausgangsgewicht bestimmt wird, die Proben bei 160°C für eine Dauer von 20 Minuten getrocknet werden und der Gewichtsverlust bestimmt wird, und man das Mikrogranulat durch Mischen der einzelnen Komponenten der Polymer-Zusammensetzung in wenigstens einem Mischwerkzeug, Austragen der Mischung als Strang, Abkühlen des Strangs bis zur Granulierfähigkeit und Granulieren desselben erhält, und das Fasermaterial ein Gewebe ist und als Polymer-Zusammensetzung eine aus wenigstens Polyamid 6 oder Polyamid 66 eingesetzt wird.

2. Verfahren gemäß Anspruch 1, **dadurch gekennzeichnet, dass** die Polymer-Zusammensetzung wenigstens ein(en) Zusatzstoff oder Additiv enthält.

3. Verfahren gemäß Anspruch 2, **dadurch gekennzeichnet, dass** als Additive Ultraviolettlicht-Stabilisatoren, Flammschutzmittel, verlaufsfördernde Additive, Gleitmittel, Antistatika, Färbemittel, Keimbildner, kristallisationsfördernde Mittel, Füllstoffe und andere Verarbeitungshilfsmittel oder deren Mischungen, eingesetzt werden.

4. Verfahren gemäß einem der Ansprüche 1 bis 3, **dadurch gekennzeichnet dass** die Mikrogranulate rund, ellipsoid, würfelförmig oder zylindrisch sind.

5. Verfahren gemäß einem der Ansprüche 1 bis 4, **dadurch gekennzeichnet, dass** die Mikrogranulate eine Shorehärte A von mehr als 90° und eine Shorehärte D von mehr als 60° aufweisen und die Shorehärte nach DIN 43505 mit Prüfgerät A bzw. Prüfgerät D bestimmt wird.

6. Verfahren gemäß einem der Ansprüche 1 bis 5, **dadurch gekennzeichnet, dass** mehrere Mikrogranulatschichten auf das Fasermaterial aufgetragen werden.

7. Verfahren gemäß einem der Ansprüche 1 bis 6, **dadurch gekennzeichnet, dass** der Auftrag des Mikrogranulats auf die Fasermaterialien in Mengen erfolgt, woraus ein nach DIN 1310 definierter Volumenanteil an Fasermaterialien im Faser-Matrix-Halbzeug im Bereich von 25 bis 80% resultiert.

8. Verfahren gemäß einem der Ansprüche 1 bis 7, **dadurch gekennzeichnet, dass** die in Schritt e) erhaltene Verbundstruktur ein einschichtiges Faser-Matrix-Halbzeug ist.

9. Verwendung einer Polymer-Zusammensetzung in Form von Mikrogranulat mit einer mittleren Korngröße im Bereich von 0,01 bis 3 mm, die mittels Trockensiebanalyse gemäß DIN 53477 bestimmt wird, zur Herstellung eines Faser-Matrix-Halbzeugs, aus wenigstens einem Endlosfasern enthaltenden Fasermaterial, wobei das Mikrogranulat eine Schüttdichte im Bereich von 200 bis 1.800 g/l aufweist, die nach EN ISO 60 bestimmt wird und das Mikrogranulat einen Gehalt an Restfeuchte von nicht mehr als 0,3 Gew.-% bezogen auf das Gesamtgewicht aufweist und der Restwassergehalt mittels Thermowaage anhand von Proben eines Gewichts im Bereich von ca. 1 bis 5 g bestimmt wird, indem das Ausgangsgewicht bestimmt wird, die Proben bei 160°C für die Dauer von 20 Minuten getrocknet werden und der Gewichtsverlust bestimmt wird, und man das Mikrogranulat durch Mischen der einzelnen Komponenten der Polymer-Zusammensetzung in wenigstens einem Mischwerkzeug, Austragen der Mischung als Strang, Abkühlen des Strangs bis zur Granulierfähigkeit und granulieren desselben erhält, und das Fasermaterial ein Gewebe ist und als Polymer-Zusammensetzung eine aus wenigstens Polyamid 6 oder Polyamid 66 eingesetzt wird.

## Claims

1. Process for producing a semifinished fibre matrix product, comprising

a) providing at least one fibre material comprising endless fibres,
b) providing a polymer composition in the form of a micropelletized material having a mean grain size, to be determined by means of dry sieve analysis according to DIN 53477, in the range from 0.01 to 3 mm,
c) applying the micropelletized material to the fibre material,
d) impregnating and consolidating the fibre material with the polymer composition to give a composite by action of temperatures not less than the melting temperature of the at least one polymer and pressure on the fibre material that has been contacted with micropelletized material,

e) cooling to obtain the composite structure, wherein the micropelletized material has a bulk density of 200 to 1800 g/L, which is determined according to EN ISO 60, and a residual moisture content of not more than 0.3% by weight, based on the total weight and the residual water content, determined by means of a thermal balance, using samples having a weight in the range from about 1 to 5 g, by determining the starting weight, drying the samples at 160°C for a duration of 20 minutes and determining the loss of weight, and obtaining the micropelletized material by mixing the individual components of the polymer composition in at least one mixing tool, discharging the mixture in strand form, cooling the strand down until it is pelletizable and pelletizing it, and the fibre material is a weave and the polymer composition used is one composed of at least nylon-6 or nylon-6,6.

2. Process according to Claim 1, **characterized in that** the polymer composition comprises at least one addition or additive.

3. Process according to Claim 2, **characterized in that** the additives used are ultraviolet light stabilizers, flame retardants, leveling-promoting additives, lubricants, antistats, colorants, nucleators, crystallization promoters, fillers and other processing auxiliaries or mixtures thereof.

4. Process according to any of Claims 1 to 3, **characterized in that** the micropellets are round, ellipsoidal, cubic or cylindrical.

5. Process according to any of Claims 1 to 4, **characterized in that** the micropellets have a Shore A hardness of more than 90° and a Shore D hardness of more than 60°, and the Shore hardness is determined according to DIN 43505 with test instrument A or test instrument D.

6. Process according to any of Claims 1 to 5, **characterized in that** multiple layers of micropelletized material are applied to the fibre material.

7. Process according to any of Claims 1 to 6, **characterized in that** the micropelletized material is applied to the fibre materials in amounts that result in a proportion by volume of fibre materials in the semifinished fibre matrix product in the range from 25% to 80% as defined according to DIN 1310.

8. Process according to any of Claims 1 to 7, **characterized in that** the composite structure obtained in step e) is a single-layer semifinished fibre matrix product.

9. Use of a polymer composition in the form of micropellets having a mean grain size in the range from 0.01 to 3 mm, which is determined by means of dry sieve analysis according to DIN 53477, for production of a semifinished fibre matrix product, from at least one fibre material comprising endless fibres, wherein the micropellets have a bulk density in the range from 200 to 1800 g/L, which is determined according to EN ISO 60, and the micropellets have a residual moisture content of not more than 0.3% by weight, based on the total weight, and the residual water content is determined by means of a thermal balance using samples having a weight in the range from about 1 to 5 g, by determining the starting weight, drying the samples at 160°C for a duration of 20 minutes and determining the loss of weight, and the micropelletized material is obtained by mixing the individual components of the polymer composition in at least one mixing tool, discharging the mixture in strand form, cooling the strand down until it is pelletizable and pelletizing it, and the fibre material is a weave and the polymer composition used is one composed of at least nylon-6 or nylon-6,6.

**Revendications**

1. Procédé de fabrication d'un semi-fini fibres-matrice, comprenant :

a) la préparation d'au moins un matériau fibreux contenant des fibres continues,
b) la préparation d'une composition de polymère sous la forme d'un microgranulat ayant une taille de grains moyenne déterminée par analyse granulométrique à sec selon DIN 53477 dans la plage allant de 0,01 à 3 mm,
c) l'application du microgranulat sur le matériau fibreux,
d) l'imprégnation et la consolidation du matériau fibreux avec la composition de polymère en un composite par l'action de températures ≥ à la température de fusion dudit au moins un polymère et d'une pression sur le matériau fibreux chargé avec le microgranulat,

e) le refroidissement avec obtention de la structure composite, le microgranulat présentant une densité apparente de 200 à 1 800 g/l, qui est déterminée selon EN ISO 60, et une teneur en humidité résiduelle inférieure ou égale à 0,3 % en poids, par rapport au poids total, et la teneur en eau résiduelle étant déterminée au moyen d'une thermobalance à partir d'échantillons d'un poids dans la plage allant d'environ 1 à 5 g, par détermination du poids initial, séchage des échantillons à 160 °C pendant une durée de 20 minutes et détermination de la perte de poids, et le microgranulat étant obtenu par mélange des composants individuels de la composition de polymère dans au moins un outil de mélange, déchargement du mélange sous la forme d'un boudin, refroidissement du boudin jusqu'à ce qu'il soit apte à la granulation, et granulation de celui-ci, et le matériau fibreux étant un tissu, et une composition constituée au moins par du polyamide 6 ou du polyamide 66 étant utilisée en tant que composition de polymère.

2. Procédé selon la revendication 1, **caractérisé en ce que** la composition de polymère contient au moins un ajout ou additif.

3. Procédé selon la revendication 2, **caractérisé en ce que** des stabilisateurs de lumière ultraviolette, des agents ignifuges, des additifs favorisant le nivellement, des lubrifiants, des antistatiques, des colorants, des agents de nucléation, des agents favorisant la cristallisation, des charges et d'autres adjuvants d'usinage ou leurs mélanges sont utilisés en tant qu'additifs.

4. Procédé selon l'une quelconque des revendications 1 à 3, **caractérisé en ce que** les microgranulats sont ronds, ellipsoïdes, cubiques ou cylindriques.

5. Procédé selon l'une quelconque des revendications 1 à 4, **caractérisé en ce que** les microgranulats présentent une dureté Shore A de plus de 90° et une dureté Shore D de plus de 60°, et la dureté Shore est déterminée selon DIN 43505 avec l'appareil d'essais A ou l'appareil d'essais D.

6. Procédé selon l'une quelconque des revendications 1 à 5, **caractérisé en ce que** plusieurs couches de microgranulat sont appliquées sur le matériau fibreux.

7. Procédé selon l'une quelconque des revendications 1 à 6, **caractérisé en ce que** l'application du microgranulat sur les matériaux fibreux a lieu en quantités desquelles résulte une proportion volumique définie selon DIN 1310 de matériaux fibreux dans le semi-fini fibres-matrice dans la plage allant de 25 à 80 %.

8. Procédé selon l'une quelconque des revendications 1 à 7, **caractérisé en ce que** la structure composite obtenue à l'étape e) est un semi-fini fibres-matrice monocouche.

9. Utilisation d'une composition de polymère sous la forme d'un microgranulat ayant une taille de grains moyenne dans la plage allant de 0,01 à 3 mm, qui est déterminée par analyse granulométrique à sec selon DIN 53477, pour la fabrication d'un semi-fini fibres-matrice, à partir d'au moins un matériau fibreux contenant des fibres continues, le microgranulat présentant une densité apparente dans la plage allant de 200 à 1 800 g/l, qui est déterminée selon EN ISO 60, et le microgranulat présentant une teneur en humidité résiduelle inférieure ou égale à 0,3 % en poids, par rapport au poids total, et la teneur en eau résiduelle étant déterminée au moyen d'une thermobalance à partir d'échantillons d'un poids dans la plage allant d'environ 1 à 5 g, par détermination du poids initial, séchage des échantillons à 160 °C pendant une durée de 20 minutes et détermination de la perte de poids, et le microgranulat étant obtenu par mélange des composants individuels de la composition de polymère dans au moins un outil de mélange, déchargement du mélange sous la forme d'un boudin, refroidissement du boudin jusqu'à ce qu'il soit apte à la granulation, et granulation de celui-ci, et le matériau fibreux étant un tissu, et une composition constituée au moins par du polyamide 6 ou du polyamide 66 étant utilisée en tant que composition de polymère.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014008018 A1
- DE 2558200 A1
- EP 0062179 A1
- WO 2008058971 A1
- WO 2010132335 A1
- WO 2012132399 A1
- WO 2012058379 A1
- DE 102011084519 A1
- EP 0485895 B1
- WO 2010132355 A1

**In der Beschreibung aufgeführte Nicht-Patentliteratur**

- *CHEMICAL ABSTRACTS,* 25038-54-4
- *CHEMICAL ABSTRACTS,* 32131-17-2
- AKV-Industrievereinigung Verstärkte Kunststoffe e.V. Handbuch Faserverbund-Kunststoffe. Vieweg-Teubner, 2010, 236
- **W. SIEBENPFEIFFER.** Leichtbau-Technologien im Automobilbau. Springer-Vieweg, 2014, 118-120